# EUROPEAN PATENT SPECIFICATION

(11) **EP 2 317 789 B1**
(45) Date of publication and mention of the grant of the patent: **27.01.2016**
(21) Application number: 09174961.4
(22) Date of filing: 03.11.2009
(51) Int. Cl.: H04W 16/28, H04W 72/04

(54) **Method, base station and cellular telecommunication network for improving the quality of service**
Verfahren, Basisstation und zellulares Telekommunikationsnetzwerk zur Verbesserung der Dienstqualität
Procédé, station radio base et réseau de télécommunication cellulaire pour l'amélioration de la qualité de service

(43) Date of publication of application: 04.05.2011
(73) Proprietor: ALCATEL LUCENT, 92100 Boulogne-Billancourt (FR)
(72) Inventor: Rouffet, Denis, 78141 Velizy (FR); Calin, Doru, Murray Hill, NJ 07974-0636 (US)
(74) Representative: Sciaux, Edmond

(56) References cited:
- EP-A2- 0 841 827
- EP-A2- 0 963 129
- EP-A2- 1 418 779
- US-A1- 2002 068 590
- US-A1- 2008 267 063
- KENYA YONEZAWA ET AL: "Propagation Characteristics Measurements for Multi-Site MIMO Systems in Urban Micro-Cellular Environment", VEHICULAR TECHNOLOGY CONFERENCE FALL (VTC 2009-FALL), 2009 IEEE 70TH, IEEE, PISCATAWAY, NJ, USA, 20 September 2009 (2009-09-20), pages 1-5, XP031600430, ISBN: 978-1-4244-2514-3

## Description

The present invention relates to a method for improving the quality of service of a cellular telecommunication network and allowing for new types of subscriptions.

It is known that traditional cellular telecommunication networks present at least the two following performance limitations:
- A first performance limitation due to re-using the same frequency band in each cell, which causes a significant drop of performance levels (e.g. signal to interference and noise ratio, user throughputs) at crossing cells or sector edges wherein different radio signals, generated by the same or different base stations, might interfere one with each other.
- A second performance limitation due to in-door performance levels (e.g. signal to interference and noise ratio, user throughputs) which are usually reduced, and are the result of a trade-off between cost, outdoor interference level and indoor coverage. Indeed, for economical reasons, wireless networks are traditionally designed to provide outdoor coverage while indoor coverage is offered only to limited areas (e.g. up to 10dB to 20dB extra losses are afforded within buildings, which quite often is not enough to propagate deep inside buildings).

To alleviate interference levels at cell crossing edges and to provide a more uniform quality of service and quality of experience, several solutions have been proposed:
▪ The "interference solution", which introduces a frequency re-use pattern, inside a re-use one frequency scheme; this method, called ICIC for Inter Cell Interference Coordination, attenuates the transmitted power over a given fraction of the frequency band. As a consequence, it may result in limiting the interference levels generated on the adjacent cells over the same given fraction of the frequency band. This method is also known as fractional frequency reuse.
▪ The "capacity solution" which is based on increasing the number of cells. It has been observed by simulation experiments that without specific methods aimed at limiting the interference, by decreasing the inter-site distance the individual site capacity is decreased as well, resulting in an overall loss in system capacity.
▪ The "indoor solution", by introducing femto cells which are low-cost, low-power base stations, designed to provide cellular service in residential and enterprise environments and operate in licensed spectrum. However, a large density of femto cells creates a significant level of interference, which in turn limits the overall system capacity.

None of the previous solutions provide the desired uniformity in the quality of service and in the quality of experience, especially for bandwidth intensive applications (e.g. mobile video), across the whole geographical area of interest. Indeed, the bandwidth intensive applications require in general a level of Signal to Interference and Noise Ratio (SINR) that is significantly higher than the SINR levels required by the traditional narrow band applications (e.g. voice, low bit data rates).

Since nowadays wireless cellular networks are typically engineered for such narrow band applications, bandwidth intensive applications such as mobile video could eventually be offered only in a much limited coverage compared to the narrow band applications. Therefore, there is a need for a method which delivers uniformity on quality of service, and quality of experience as perceived from the end user point of view, in a wireless cellular network.

The document US2008/0267063 discloses a method wherein cells are irradiated by radio beams generated by base stations, each base station comprising means to irradiate at different time different areas of an associated cell and a step of synchronizing a first sequence of radio beams generated by a first base station with another sequence of radio beams generated by another base station.

Accordingly, the present invention is directed to a method for improving the quality of service and the quality of experience offered by a cellular telecommunication network, mainly by controlling more efficiently cell edge interferences.

To achieve this and other advantages, and in accordance with the purpose of the invention as embodied and broadly described herein, the present invention relates to a method for improving the quality of service of a cellular telecommunication network wherein cells are irradiated by radio beams generated by base stations, each base station comprising means to irradiate at different time different areas of an associated cell by forming different radio beams, characterized in that it comprises the step of synchronizing a first sequence of radio beams, generated by a first base station, with at least one other sequence of radio beams, generated by at least one other base station, in order to limit the radio interferences between said first base station and said at least one other radio-adjacent base station. The invention concerns a method, base station and cellular telecommunications network as defined in the appended claims.

Thereby, the invention describes a simple and efficient method to provide a more uniform quality of service and quality of experience to the end users, since radio beams sequences can be generated in a way that completely or partially avoids interferences as described thereafter.

In one embodiment, the synchronization of said first base station's radio beams sequence with said at least one other base station's radio beams sequence comprises the step for both said first base station and said at least one other base station of following predetermined sequences of radio beams generation according to predetermined schedules and patterns.

In one embodiment, the predetermined radio beam schedules and patterns are modified depending on quality of service reports received by said first base station and/or said at least one other base station.

In one embodiment, the quality of service reports are generated by said first base station, said at least one other base station and/or by mobile terminals.

In one embodiment, said first base station and said at least one other base station transmit to each other received communications from mobile terminals in order to implement coordinated multi-site MIMO communications.

The first base station and the at least one other base station implement one of the following radio beam sequences:
- a fixed predetermined sequence of radio beams,
- a dynamically modified sequence of radio beams,
- an adapted sequence of radio beams aimed to generate multisite MI-MO communications, depending on a level of radio interferences between base stations.

In one embodiment, the number and/or the patterns of radio beam(s) formed by said first base station and/or said at least one other base station are modified depending on a level of radio interference between said first base station and said at least one other base station.

In one embodiment the radio beams are adjusted in elevation.

The invention also relates to a base station for a cellular telecommunication network wherein cells are irradiated by radio beams generated by base stations, each base station comprising means to irradiate at different time different areas of an associated cell by forming different radio beams, characterized in that it comprises means for synchronizing a first sequence of radio beams with at least one other sequence of radio beams, generated by at least one other base station, in order to limit its radio interferences with said at least one other base station following a method according to any of the previous embodiments.

The invention also relates to a cellular telecommunication network comprising cells irradiated by radio beams generated by base stations, each base station comprising means to irradiate at different time different areas of an associated cell by forming different radio beams, characterized in that it comprises means for synchronizing a first sequence of radio beams, generated by a first base station, with at least one other sequence of radio beams, generated by at least one other base station, in order to limit the radio interferences between said first base station and said at least one other base station following a method according to any of the previous embodiments.

The accompanying drawings are included to provide a further understanding of the invention and are incorporated in and constitute a part of this specification, to illustrate embodiments of the invention and, together with the description, to explain the principles of the invention:
- Figure 1, 2, 3 and 4 are radio beam diagrams of a first base station implementing one embodiment of the invention, and
- Figure 5, 6 and 7 represent the functioning of two adjacent base stations implementing one embodiment of the invention.

Reference will now be made in detail to the present preferred embodiment of the invention, an example of which is illustrated in the accompanying drawings. Wherever possible, the same reference numerals will be used throughout the drawings to refer to the same or like parts.

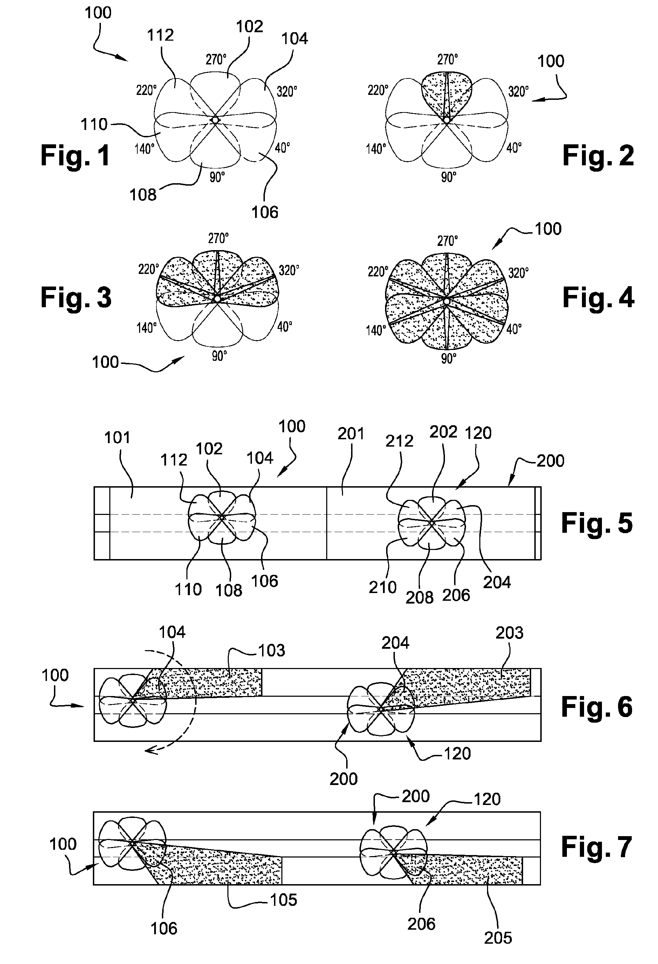

In reference to figure 1, a first base station 100 according to the invention might be able to generate, or activate, one or more different radio beams 102, 104, 106, 108, 110 or 112 at different time, each radio beam irradiating a different area of an associated cell.

In other words, each radio beam is associated with a central azimuth, or horizontal angle, as summarized in the table herein below:

| **Beam** | **Azimuth (°)** |
|---|---|
| 102 | 270° |
| 104 | 320° |
| 106 | 40° |
| 108 | 90° |
| 110 | 140° |
| 112 | 220° |

Note that the azimuth values are just provided as examples here. The maximum number of radio beams can be any positive integer number as long as it is technologically feasible and justifiable by the level of system performance.

Also note that, in one embodiment, the radio beams are adjusted in elevation i.e. perpendicularly to the horizontal surface in order to adapt their generation to the environment. Indeed, this adaptation might be done considering the high level of scattering which exists in urban and in indoor environments.

Moreover the base station 100, according to this embodiment of the invention, comprises means to activate different number of radio beams simultaneously as represented in figure 2, 3 or 4 for, respectively, one, three and six radio beams. The beams which are illuminated are represented by shaded areas in all these figures.

Independently of the number of radio beams generated by the first base station 100 at the same time, said first base station 100 comprises means to synchronize a first sequence of radio beams with at least one other sequence of radio beams generation, performed by at least one other base station which may irradiate an area overlapping an area irradiated by the said first base station 100. Thereafter, such at least one other base station might be called radio-adjacent base station.

As illustrated in figures 5, 6 and 7, such synchronization can easily be implemented when both the said first base station 100 and the said at least one other radio-adjacent base station follow predetermined sequences of beam generation according to predetermined schedules and patterns.

In this example, which illustrates only two base stations 100 and 120 for the sake of clarity, the first sequence of radio beams associated with the first base station 100 and the at least one other sequence of radio beams associated with the at least one other base station 120 are identical and comprise seven periods:
- A first period (figure 5) wherein both the said first base station 100 and the said at least one other radio-adjacent base station 120 generate simultaneously their six radio beams (102, 104, 106, 108, 110 and 112 for the base station 100; 202, 204, 206, 208, 210 and 212 for the base station 120).
- A second period (figure 6) wherein both the said first base station 100 and the said at least one other radio-adjacent base station 120 generate simultaneously their radio beams irradiating the azimuth at 320° (radio beam 104 for the base station 100; radio beam 204 for the base station 120).
- A third period (figure 7) wherein both the said first base station 100 and the said at least one other radio-adjacent base station 120 generate simultaneously their radio beams iradiating the azimuth at 40° (106 for the base station 100; 206 for the base station 120).
- And four other periods - no represented for the sake of clarity - with a 50° or 80° shift of the irradiating beams at each period transition (e.g. 106 to 108 for the base station 100 and 206 to 208 for the base station 120 during the shift of the third period to the fourth).

For instance, such a sequence of predetermined radio beams - defined by schedule(s) and pattern(s) - can be implemented in order to provide, during the first period, a general service to all mobile terminals within cells 101 and 201 associated to, respectively, base stations 100 and 120.

Thereafter, in the following periods, the base stations 100 and 120 provide successively a specific service to specific areas as 103 or 203 (figure 6) and, thereafter, 105 or 205 (figure 7), said specific areas not being adjacent so that edge interference is considerably reduced or rendered practically inexistent.

Indeed, as illustrated, radio beams 103 and 203, or 105 and 205, do not present common crossing edges for simplifying illustration purposes even if, due to radio propagation properties and scattering properties of the radio environments, it is possible to observe some level of interference across some geographical area where radio beams 103 and 203 still overlap.

Nevertheless, such interference levels are expected to be considerably lower compared to scenarios where base stations 100 and 120 would radiate according to an omni-directional pattern for instance.

As a consequence, a more satisfactory quality of radio signal can be achieved in the specifically irradiated areas as 103, 105, 203 and 205 with a quality of radio signal considerably above the quality obtained when all the six radio beams are generated simultaneously per base station or when base stations have an omni-directional antenna pattern,

It might be underlined that, in figures 6 and 7, the invention is implemented on the basis of a unique active radio beam per base station at any given time. Nevertheless, several radio beams can be generated simultaneously during a period without creating significant edge interferences.

In this embodiment, the predetermined beam schedules and patterns - e.g. form, deepness and/or wideness of the radio beam- can be modified depending on quality of service reports received by the said first base station and/or the said at least one other radio-adjacent base station.

For that purpose, quality of service reports generated by the said first base station, the said at least one other radio-adjacent base station and by mobile terminals are taken into account by each base station.

On the basis of such quality of service reports, each base station might generate a database indicating different beam interference levels with other base stations.

As an example, considering thereafter that the j^{th} radio beam of the said first base station 100 is referred to as BS1j, and that the k^{th} radio beam of the said at least one other radio-adjacent base station 120 is referred to as BS2k, multiple interference levels can be categorized so that, in a simplified approach, three different interference levels are considered, namely L for Low, M for Medium and H for high

| | | BS2 beams (BS2k); 1 <=k<=6 | | | | | |
|---|---|---|---|---|---|---|---|
| | | 1 | 2 | 3 | 4 | 5 | 6 |
| BS1 beams (BS1j); 1<=j<=6 | 1 | L | L | L | L | M | M |
| | 2 | M | L | M | L | H | H |
| | 3 | L | L | L | M | H | H |
| | 4 | L | L | L | L | M | M |
| | 5 | L | L | L | L | L | L |
| | 6 | L | L | L | L | L | L |

As previously indicated, the radio beam sequences might also consider the interference database from adjacent - or neighboring - base stations to determine the sequences of radio beams to be generated.

In one embodiment, such consideration is performed automatically by each base station so that it can dynamically adapt the radio beam sequence, e.g. to deliver a given quality of service.

For instance, referring to base stations 100 and 120, it could be that users associated with beams 1 and 4 have high traffic activity while users associated with beams 5 and 6 have moderate activity and those associated with beams 2 and 3 have no traffic activity.

In this case, a sequence of radio beam generation across different periods for these base stations might become [all, 1, 1, 4, 4, 5, 6]. This provides some flexibility to adjust the radio beam switching pattern to accommodate either fluctuations in traffic demands or changes in radio environment.

The beam switching sequence can be also formed by sub-bands (i.e. fractions of the used radio carrier bandwidth). Usually, the number of sub-bands is determined by propagation, channel response, or is specified by standards. An example is shown below for a case of four sub-bands.

| subband | beam sequence | | | | | | |
|---|---|---|---|---|---|---|---|
| 1 | all | 1 | 1 | 4 | 4 | void | 6 |
| 2 | | 1 | 2 | 4 | 4 | 5 | void |
| 3 | | 1 | 1 | 4 | 4 | void | 6 |
| 4 | | 1 | 1 | 3 | 4 | void | void |

In this example, the radio beam sequence for sub-band 1 is [all, 1, 1, 4, 4, void, 6]. An example with "void" has been shown to illustrate the fact that no radio beam may be associated to a sub-band for a given time slot. Similarly, the beam sequence for sub-band 4 is [all, 1, 1, 3, 4, void, void].

Despite radio beam generation synchronization, it might be that cell interference cannot be avoided. In this case, according to an embodiment, the said first base station and the said at least one other radio-adjacent base station might transmit to each other received communications of mobile terminals in order to implement a coordinated multi-site MIMO communications network.

In this case, at least three types of sequences of radio beams are considered by said first base station and said at least one other radio-adjacent base station, namely:
- A first type of radio beams wherein predetermined sequences of radio beams are generated,
- A second type of radio beams wherein dynamically modified sequences of radio beams are generated,
- A third type of radio beams, wherein a multi-site MIMO communications network is considered.

It is considered that the first type of sequencing is the easiest to implement and the third level is the most complex so that their implementation might be operated successively according to different levels of interference.

Typically increasing levels of interference will correspond to increasing levels of complexity in the implemented type of sequence.

In other embodiment, the number and/or the patterns of radio beam(s) formed by the said first base station are modified depending on the level of radio interference.

Different embodiments of the invention might be implemented. For instance, in the Long Term Evolution technology, information about interference is provided through X2 interface - as defined for instance in the 3GPP consortium 36.42x specifications.

Also in one embodiment, each base station has means to modify automatically its radio beam generations to limit radio beam interferences. Thereby radio beam patterns are adjusted dynamically according to, for instance, evolution of traffic and user mobility, topology of the covered area, nature of scattering environment, non uniformity of traffic.

## Claims

1. Method for improving the quality of service of a cellular telecommunication network wherein cells (101, 201) are irradiated by radio beams (102, 104, 106, 108, 110, 112; 202, 204, 206, 208, 210, 212) generated by base stations, each base station (100, 120) comprising means to irradiate at different time different areas (103, 105; 203, 205) of an associated cell by forming different radio beams, said method comprising the step of synchronizing a first sequence of radio beams (104, 106), generated by a first base station (100), with at least one other sequence of radio beams (204, 206), generated by at least one other base station (120), in order to limit the radio interferences between said first base station (100) and said at least one other base station (120), said method being **characterized in that** said first base station and said at least one other base station implement one of the following radio beam sequences:
- a fixed predetermined sequence of radio beams,
- a dynamically modified sequence of radio beams,
- an adapted sequence of radio beams aimed to generate multisite MIMO communications,
depending on a level of radio interferences between base stations.

2. Method according to claim 1 wherein the synchronization of said first base station's radio beams sequence (104, 106) with said at least one other base station's radio beams sequence (204, 206) comprises the step for both said first base station (100) and said at least one other base station (120) of following predetermined sequences of radio beams generation according to predetermined schedules and patterns.

3. Method according to claim 2 wherein the predetermined radio beam schedules and patterns are modified depending on quality of service reports received by said first base station (100) and/or said at least one other base station (120).

4. Method according to claim 3 wherein the quality of service reports are generated by said first base station (100), said at least one other base station (120) and/or by mobile terminals.

5. Method according to claim 2, 3 or 4 wherein said first base station (100) and said at least one other base station (120) transmit to each other received communications from mobile terminals in order to implement coordinated multi-site MIMO communications.

6. Method according to any of the previous claims wherein the number and/or the patterns of radio beam(s) formed by said first base station (100) and/or said at least one other base station (120) are modified depending on a level of radio interference between said first base station (100) and said at least one other base station (120).

7. Method according to any of the previous claims wherein the radio beams are adjusted in elevation.

8. Base station for a cellular telecommunication network wherein cells (101, 201) are configured to be irradiated by radio beams (102, 104, 106, 108, 110, 112; 202, 204, 206, 208, 210, 212) generated by base stations, each base station (100, 120) comprising means to irradiate at different time different areas (103, 105; 203, 205) of an associated cell by forming different radio beams, **characterized in that** it comprises means for synchronizing a first sequence of radio beams (104, 106) with at least one other sequence of radio beams (204, 206), generated by at least one other base station (120), in order to limit its radio interferences with said at least one other base station (120) said means for synchronising configured to implement a method according to any of the claims 1 to 7.

9. Cellular telecommunication network comprising cells (101, 201) configured to be irradiated by radio beams (102, 104, 106, 108, 110, 112; 202, 204, 206, 208, 210, 212) generated by base stations, each base station (100, 120) comprising means to irradiate at different time different areas (103, 105; 203, 205) of an associated cell by forming different radio beams, **characterized in that** it comprises means for synchronizing a first sequence of radio beams (104, 106), generated by a first base station (100), with at least one other sequence of radio beams (204, 206), generated by at least one other base station (120), in order to limit the radio interferences between said first base station (100) and said at least one other base station (120), said means for synchronising configured to implement a method according to any of the claims 1 to 7.

## Patentansprüche

1. Verfahren zur Verbesserung der Dienstgüte eines zellularen Telekommunikationsnetzes, wobei Zellen (101, 201) von Funkstrahlen (102, 104, 106, 108, 110, 112; 202, 204, 206, 208, 210, 212) bestrahlt werden, die von Basisstationen generiert werden, wobei jede Basisstation (100, 120) Mittel für das Bestrahlen verschiedener Bereiche (103, 105; 203, 05) einer zugeordneten Zelle zu verschiedenen Zeiten umfasst, was durch die Bildung verschiedener Funkstrahle erfolgt, wobei das Verfahren den Schritt des Synchronisierens einer ersten Sequenz von Funkstrahlen (104, 106), die von einer ersten Basisstation (100) generiert werden, mit mindestens einer weiteren Sequenz von Funkstrahlen (204, 206) umfasst, die von mindestens einer weiteren Basisstation (120) generiert werden, um die Funkinterferenzen zwischen besagter erster Basisstation (100) und besagter mindestens einer weiteren Basisstation (120) zu begrenzen, wobei besagtes Verfahren **dadurch gekennzeichnet, dass** besagte erste Basisstation und besagte, mindestens eine weitere Basisstation eine der folgenden Funkstrahlsequenzen implementieren:
- eine feste, vordefinierte Sequenz von Funkstrahlen,
- eine dynamisch modifizierte Sequenz von Funkstrahlen,
- eine angepasste Sequenz von Funkstrahlen, die darauf abzielt, Multisite-IMO-Kommunikationen zu generieren,
in Abhängigkeit von einem Grad bestehender Funkinterferenzen zwischen Basisstationen.

2. Verfahren nach Anspruch 1, wobei die Synchronisierung der Funkstrahlsequenz (104, 106) besagter erster Basisstation mit der Funkstrahlsequenz (204, 206) besagter mindestens einer weiteren Basisstation für beide Basisstationen, besagte erste Basisstation (100) und besagte mindestens eine weitere Basisstation (120), den Schritt des Befolgens einer vordefinierten Erzeugung von Funkstrahlsequenzen gemäß vordefinierten Zeitplänen und Mustern umfasst.

3. Verfahren nach Anspruch 2, wobei die vordefinierten Funkstrahl-Zeitpläne und - Muster in Abhängigkeit von den von besagter erster Basisstation (100) und/oder der besagten, mindestens einen weiteren Basisstation (120) empfangenen Dienstgüteberichten modifiziert werden.

4. Verfahren nach Anspruch 3, wobei die Dienstgüteberichte von besagter erster Basisstation (100), der besagten, mindestens einen weiteren Basisstation (120) und/oder von mobilen Endgeräten generiert werden.

5. Verfahren nach Anspruch 2, 3 oder 4, wobei besagte erste Basisstation (100) und besagte mindestens eine weitere Basisstation (120) einander gegenseitig von mobilen Endgeräten empfangene Mitteilungen übermitteln, um koordinierte Multisite-IMO-Kommunikationen zu implementieren.

6. Verfahren nach einem jeglichen der vorangehenden Ansprüche, wobei die Anzahl und/oder die Muster des oder der Funkstrahle, die von besagter erster Basisstation (100) und/oder der besagten, mindestens einen weiteren Basisstation (120) gebildet werden, in Abhängigkeit vom Grad der Funkinterferenzen zwischen besagter erster Basisstation (100) und der besagten, mindestens einen weiteren Basisstation (120) modifiziert werden.

7. Verfahren nach jeglichem der vorangehenden Ansprüche, wobei die Funkstrahle nach oben angepasst werden.

8. Basisstation für ein zellulares Telekommunikationsnetz, wobei Zellen (101, 201) dafür konfiguriert sind, von Funkstrahlen (102, 104, 106, 108, 110, 112; 202, 204, 206, 208, 210, 212) bestrahlt zu werden, die von Basisstationen generiert werden, wobei jede Basisstation (100, 120) Mittel für das Bestrahlen verschiedener Bereiche (103, 105; 203, 205) einer zugeordneten Zelle zu verschiedenen Zeiten umfasst, was durch die Bildung verschiedener Funkstrahle erfolgt, **dadurch gekennzeichnet, dass** die Basisstation Mittel für das Synchronisieren einer ersten Sequenz von Funkstrahlen (104, 106) mit mindestens einer weiteren Sequenz von Funkstrahlen (204, 206) umfasst, die von mindestens einer weiteren Basisstation (120) generiert werden, um ihre Funkinterferenzen mit der besagten, mindestens einen weiteren Basisstation (120) zu begrenzen, wobei besagte Synchronisierungsmittel dafür konfiguriert sind, um ein Verfahren nach einem jeglichen der Ansprüche 1 bis 7 zu implementieren.

9. Zellulares Telekommunikationsnetz, das Zellen (101, 201) umfasst, die dafür konfiguriert sind, um von Funkstrahlen (102, 104, 106, 108, 110, 112; 202, 204, 206, 208, 210, 212) bestrahlt zu werden, die von Basisstationen generiert werden, wobei jede Basisstation (100, 120) Mittel für das Bestrahlen verschiedener Bereiche (103, 105; 203, 205) einer zugeordneten Zelle zu verschiedenen Zeiten umfasst, was durch die Bildung verschiedener Funkstrahle erfolgt, **dadurch gekennzeichnet, dass** es Mittel für das Synchronisieren einer ersten Sequenz von Funkstrahlen (104, 106), die von einer ersten Basisstation (100) generiert werden, mit mindestens einer weiteren Sequenz von Funkstrahlen (204, 206) umfasst, die von mindestens einer weiteren Basisstation (120) generiert werden, um die Funkinterferenzen zwischen besagter erster Basisstation (100) und der besagten, mindestens einen weiteren Basisstation (120) zu begrenzen, wobei besagte Synchronisierungsmittel dafür konfiguriert sind, um ein Verfahren nach einem jeglichen der Ansprüche 1 bis 7 zu implementieren.

## Revendications

1. Procédé d'amélioration de la qualité de service d'un réseau de télécommunication cellulaire, dans lequel les cellules (101, 201) sont irradiées par des faisceaux radio (102, 104, 106, 108, 110, 112 ; 202, 204, 206, 208, 210, 212) générés par des stations de base, chaque station de base (100, 120) comprenant des moyens permettant d'irradier à différents moments différentes zones (103, 105; 203, 205) d'une cellule associée par formation de différents faisceaux radio, ledit procédé comprenant l'étape consistant à synchroniser une première séquence de faisceaux radio (104, 106), générée par une première station de base (100), avec au moins une autre séquence de faisceaux radio (204, 206), générée par au moins une autre station de base (120), afin de limiter les interférences radio entre ladite première station de base (100) et ladite au moins une autre station de base (120), ledit procédé étant **caractérisé en ce que** ladite première station de base et ladite au moins une autre station de base exécutent l'une des séquences de faisceaux radio suivantes :
- séquence de faisceaux radio prédéfinie fixe,
- séquence de faisceaux radio modifiée de manière dynamique
- séquence de faisceaux radio adaptés destinés à générer des communications MIMO multisites,
en fonction d'un niveau d'interférences radio entre les stations de base.

2. Procédé selon la revendication 1, dans lequel la synchronisation de la séquence de faisceaux radio de ladite première station de base (104, 106) avec la séquence de faisceaux radio de ladite au moins une autre station de base (204, 206) comprend l'étape, pour ladite première station de base (100) et ladite au moins une autre station de base (120), consistant à suivre des séquences prédéterminées de génération de faisceaux radio en fonction de programmes et de motifs prédéterminés.

3. Procédé selon la revendication 2, dans lequel les programmes et motifs de faisceaux radio prédéterminés sont modifiés en fonction de rapports de qualité de service reçus par ladite première station de base (100) et/ou ladite au moins une autre station de base (120).

4. Procédé selon la revendication 3, dans lequel les rapports de qualité de service sont générés par ladite première station de base (100), par ladite au moins une autre station de base (120) et/ou par des terminaux mobiles.

5. Procédé selon les revendications 2, 3, ou 4, dans lequel ladite première station de base (100) et ladite au moins une autre station de base (120) se transmettent l'une à l'autre les communications reçues des terminaux mobiles afin de mettre en oeuvre des communications coordonnées MIMO multisite.

6. Procédé selon l'une quelconque des revendications précédentes, dans lequel le nombre et/ou les motifs du ou des faisceau(x) radio formé(s) par ladite première station de base (100) et/ou ladite au moins une autre station de base (120) sont modifiés en fonction d'un niveau d'interférences radio entre ladite première station de base (100) et ladite au moins une autre station de base (120).

7. Procédé selon l'une quelconque des revendications précédentes, dans lequel les faisceaux radio sont ajustés en élévation.

8. Station de base pour un réseau de télécommunication cellulaire, dans lequel les cellules (101, 201) sont configurées pour être irradiées par des faisceaux radio (102, 104, 106, 108, 110, 112 ; 202, 204, 206, 208, 210, 212) générés par les stations de base, chaque station de base (100, 120) comprenant des moyens permettant d'irradier à différents moments différentes zones (103, 105; 203, 205) d'une cellule associée par formation de différents faisceaux radio, **caractérisée en ce qu'**elle comprend des moyens de synchronisation d'une première séquence de faisceaux radio (104, 106) avec au moins une autre séquence de faisceaux radio (204, 206), générée par au moins une autre station de base (120), afin de limiter ses interférences radio avec ladite au moins une autre station de base (120), lesdits moyens de synchronisation étant configurés pour mettre en oeuvre un procédé selon l'une quelconque des revendications 1 à 7.

9. Réseau de télécommunication cellulaire comprenant des cellules (101, 201) configurées pour être irradiées par des faisceaux radio (102, 104, 106, 108, 110, 112 ; 202, 204, 206, 208, 210, 212) générés par les stations de base, chaque station de base (100, 120) comprenant des moyens d'irradiation à différents moments de différentes zones (103, 105 ; 203, 205) d'une cellule associée par formation de différents faisceaux radio, **caractérisé en ce qu'**il comprend des moyens de synchronisation d'une première séquence de faisceaux radio (104, 106), générée par une première station de base (100), avec au moins une autre séquence de faisceaux radio (204, 206), générée par au moins une autre station de base (120), afin de limiter ses interférences radio entre ladite première station de base (100) et ladite au moins une autre station de base (120), lesdits moyens de synchronisation étant configurés pour mettre en oeuvre un procédé selon l'une quelconque des revendications 1 à 7.
